# EUROPÄISCHE PATENTSCHRIFT

(11) **EP 1 777 052 B1**
(45) Veröffentlichungstag und Bekanntmachung des Hinweises auf die Patenterteilung: **30.05.2012**
(21) Anmeldenummer: 06021689.2
(22) Anmeldetag: 17.10.2006
(51) Int. Cl.: A43B 3/10, B29C 45/00, B29C 33/18, B29C 33/38, B29C 39/10, B29D 35/00, A43B 3/24, A43B 3/00, A43B 1/00, A43B 23/02, B29D 35/14, A43B 23/24

(54) **Mit einem Dekor versehener Kunststoffschuh und Verfahren zu seiner Herstellung**
Decorated plastic footwear and process for manufacturing
Chaussure pourvue d'une décoration et procédé d'élaboration

(30) Priorität: 24.10.2005 DE 102005051155
(43) Veröffentlichungstag der Anmeldung: 25.04.2007
(73) Patentinhaber: ALSA GmbH, D-36396 Steinau-Uerzell (DE)
(72) Erfinder: Bensing, Willi, 36381 Schlüchtern-Kressenbach (DE); Herber, Karl-Heinrich, 36391 Sinntal-Mottgers (DE)
(74) Vertreter: Hebing, Norbert

(56) Entgegenhaltungen:
- EP-A1- 1 574 144
- DE-A1- 2 930 807
- FR-A1- 2 847 433
- US-A- 3 568 339

## Beschreibung

Die Erfindung bezieht sich auf einen mit einem Dekor versehenen Kunststoffschuh, insbesondere in Form eines Clogs, aufweisend eine sohle und ein Oberteil, das mit der Sohle verbunden ist, wobei auf der Oberseite des Oberteils eine ein Dekor aufweisende Dekorfolie flächig befestigt ist und das Dekor auf die dem Oberteil zugewandte Seite der Dekorfolie aufgedruckt ist.

Ein derartiger Kunststoffschuh ist in der FR (A) 2 847 433 beschrieben. Die aus einem Polyamid oder einem Polyester bestehende Dekorfolie wird mit einer Klebeschicht versehen und in eine Gussform eingelegt, in die danach zur Formung eines Schuhteils, nämlich der Schelle eines Skischuhs, ein Polyurethan oder ein Polypropylen eingespritzt wird. Diese Vorgehensweise hat den Nachteil, dass auf die Dekorfolie nicht nur ein Dekor, sondern auch eine Klebeschicht aufgebracht werden muss.

In der DE 84 06 746 U1 ist ein Kunststoffstiefel beschrieben, dessen Schaft aus einem durchsichtigen Kunststoff gespritzt ist. An der Innenseite des Schaftes ist eine Schicht aus reflektierendem Material angeordnet, die einerseits warnfunktionen ausübt, aber auch als Dekor gesehen werden kann.

Da die Dekorschicht an der Innenseite angeordnet ist, geht die wirkung der Schicht verloren, wenn das Schaftmaterial im Lauf der zeit durch Umwelteinflüsse trüber wird. Außerdem kann eine solche Schicht nur umständlich an der vorgesehenen stelle befestigt werden.

Die EP 1 574 144 beschreibt einen Schuh mit einem aus zwei etwa gleich dicken Schichten bestehenden Oberteil, wobei zwischen den Schichten ein Dekorelement angeordnet ist. Die DE 29 30 807 beschreibt die Herstellung eines Kunststoffschuhs (Clog) im Spritzgussverfahren.

Die Erfindung beruht somit auf dem Problem, einen Kunststoffschuh mit einer langlebigen Dekorschicht zu versehen, die über die Lebensdauer des Schuhs gut sichtbar bleibt, und die außerdem leicht angebracht werden kann.

Zur Lösung des Problems sieht die Erfindung vor, dass die Folie aus demselben Material besteht wie das Oberteil und dass die Verbindung zwischen der Dekorfolie und dem Oberteil klebemittelfrei ist.

Wie weiter unten ausgeführt wird, lässt sich eine solche Folie leicht anbringen. Sie dient lediglich als Träger des Dekors und kann daher sehr dünn ausgeführt werden. Eine typische Dicke beträgt 0,2 bis 0,3 mm.

Das Dekor wird vorzugsweise auf die dem Oberteil zugewandte Seite der Dekorfolie aufgedruckt. Am Schuh befindet sich damit der Dekordruck geschützt zwischen der Folie und dem Oberteil.

Erfindungsgemäß erhält man eine besonders innige Verbindung zwischen der Folie und dem Oberteil, wenn Folie und Oberteil aus demselben Material, z. B. einem Polyurethan, bestehen.

Der Schuh selbst besteht dabei aus einem geschäumten Polyurethan, während die Folie dicht ausgeführt ist und damit gleichzeitig den Schuh wasserdicht abdeckt.

Die Verbindung zwischen dem Kunststoffmaterial der Dekorfolie und des Oberteils wird durch die Erwärmung des Kunststoffmaterials des Oberteils während des Ausschäumens bewirkt, so dass die Verbindung zwischen der Dekorfolie und dem Oberteil klebemittelfrei gehalten werden kann.

Die Erfindung bezieht sich außerdem auf ein Verfahren zur Herstellung eines Schuhs, wobei die Sohle und das Oberteil durch Einbringen und Aufschäumung des Schuhmaterials in eine Gussform hergestellt wird, die aus wenigstens einer Ober- und einer Unterschale besteht, wobei die Innenseite der Oberschale die Oberseite des Oberteils abbildet.

Dies ist ein typisches Herstellungsverfahren u. a. für einen Kunststoffschuh in Form eines Clogs. Sohle und Oberteil bilden typischerweise eine Einheit und werden in einem Vorgang hergestellt. Die Herstellung eines solchen Schuhs mit einem zusätzlichen Fußbett aus einem Kork-Gummi-Gemisch ist in der DE 201 12 431 U1 beschrieben.

Die Erfindung beruht auf dem Problem, das Herstellungsverfahren so zu ergänzen, dass der Schuh dabei auf möglichst einfache Weise mit einer außenseitig angebrachten Dekorfolie versehen wird.

Zur Lösung des Problems sieht die Erfindung vor, dass die Dekorfolie vor dem Einbringen des Schuhmaterials an der Innenseite der Oberschale angeordnet wird.

Das oben skizzierte Herstellungsverfahren muss daher lediglich um einen Schritt, nämlich der Anordnung der Dekorfolie an der Oberschale, ergänzt werden. Die weiteren Schritte bleiben unverändert. Während des Aufschäumens des Materials des Oberteils verbindet sich die Dekorfolie flächig mit dem Oberteil.

Um einen sicheren und faltenfreien Halt der Dekorfolie an der Oberschale zu gewährleisten, wird vorgeschlagen, dass die Dekorfolie mittels Unterdruck an der Innenseite der Oberschale gehalten wird.

Dafür verwendet man eine den Unterdruck erzeugende Saugvorrichtung, die einen feinporigen luftdurchlässigen Metallschaumformkörper vorzugsweise aus Aluminium aufweist, der wenigstens die Innenlage der Oberform bildet. Für eine flächige Anlage der Dekorfolie ist es entscheidend, dass der Metallschaumformkörper sich über die Ausdehnung der Dekorfolie erstreckt, so dass diese vollflächig durch Unterdruck an dem Metallschaumformkörper gehalten werden kann.

Damit sich die Dekorfolie der Form der Oberschale anpassen kann, wird die Dekorfolie vor dem Anbringen an der Oberschale z. B. auf 80° C erwärmt.

Im Folgenden soll anhand eines Ausführungsbeispiels die Erfindung näher erläutert werden. Dazu zeigen:
- Fig. 1: eine perspektivische Ansicht eines aus Kunststoff bestehenden Clogs,
- Fig. 2: einen Querschnitt durch den Aufbau des Oberteils des Clogs,
- Fig. 3: eine schematische Querschnittsdarstellung einer Gussform zum Herstellen eines Clogs gemäß Fig. 1.

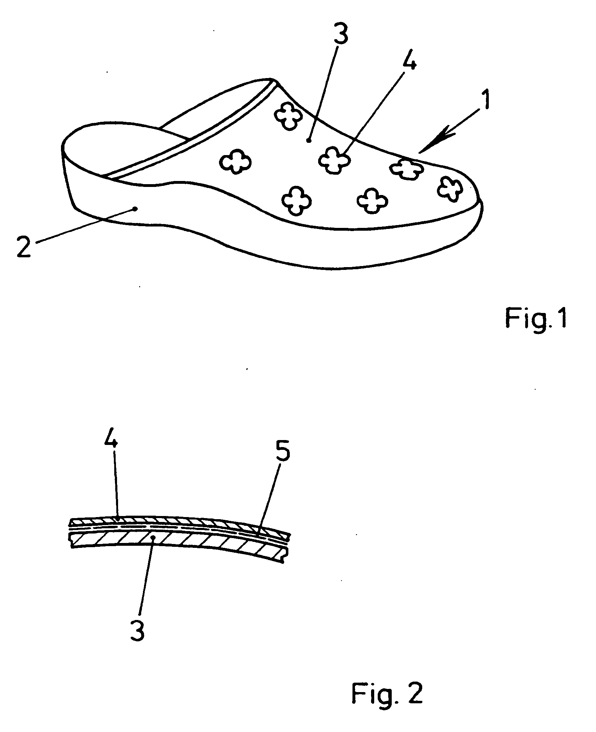

Es wird zunächst auf die Fig. 1 Bezug genommen. Diese zeigt einen Kunststoffschuh 1 in Form eines Clogs. Der Schuh 1 besteht aus einer Sohle 2 und einem Oberteil 3, das mit einem Dekor versehen ist.

Fig. 2 zeigt einen Querschnitt durch den Aufbau des Oberteils 3 des Clogs. Das Oberteil 3 selbst besteht aus einem geschäumten PU-Material, auf dem sich eine durchsichtige Dekorfolie 4 befindet, die 0,2 bis 0,3 mm dick ist und die ebenfalls aus einem PU-Material besteht. Dazwischen befindet sich eine sehr dünne gedruckte Schicht 5, die nach dem gewünschten Dekor gestaltet ist. Das Oberteil 3 und die Dekorfolie 4 sind flächig und klebemittelfrei innig miteinander verbunden.

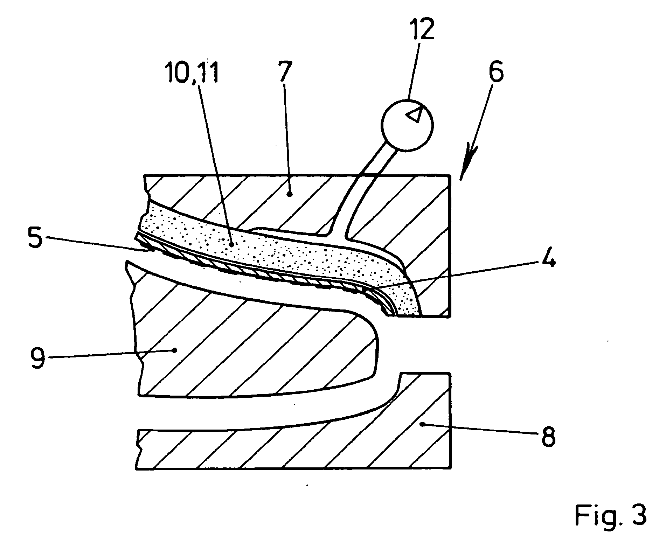

Fig. 3 zeigt schematisch eine Anordnung zur Herstellung eines Schuhs nach Fig. 1. Eine Gussform 6 besteht aus einer Oberschale 7, einer Unterschale 8 und einem Kern 9, die in geschlossener Form einen Hohlraum einschließen, in dem zur Bildung eines Schuhs 2 ein Kunststoffmaterial eingespritzt bzw. eingebracht und aufgeschäumt wird. Gemäß der Erfindung ist die Oberschale 7 bzw. zumindest ihre innere Lage 10 aus einem feinporigen Metallschaumformkörper 11 aus Aluminiumschaum gebildet, der mit einer Saugpumpe 12 verbunden ist.

Zum Anbringen der Dekorfolie wird wie folgt vorgegangen. Eine einseitig mit dem gewünschten Muster bedruckte Dekorfolie 4 aus Polyurethan wird zunächst passend geschnitten, dann leicht erwärmt und danach in die noch offene Form eingebracht und an den Metallschaumformkörper 11 flächig angelegt, wobei der Druck außen liegt. Der durch die Pumpe 12 in dem Metallschaumformkörper 11 erzeugte Unterdruck hält die Dekorfolie 4 an ihrer Unterseite. Da die Dekorfolie 4 zuvor erwärmt wurde, passt sie sich faltenfrei der Form des Metallschaumformkörpers 11 an.

Nun wird die Form wie üblich geschlossen und wie üblich der Schuh selbst erzeugt. Dabei verbindet sich die Dekorfolie mit dem Material des Oberteils 3, ohne dass ein Kleber oder sonstiges Bindemittel zum Einsatz kommen müsste.

### Bezugszeichenliste

- 1: Kunststoffschuh
- 2: Sohle
- 3: Oberteil
- 4: Dekorfolie
- 5: Gedruckte Schicht

- 6: Gussform
- 7: Oberschale
- 8: Unterschale
- 9: Kern
- 10: Innere Lage

- 11: Metallschaumformkörper
- 12: Saugpumpe

## Patentansprüche

1. Kunststoffschuh, insbesondere in Form eines Clogs, aufweisend eine Sohle (2) und ein Oberteil (3), das mit der Sohle (2) verbunden ist, wobei auf der Oberseite des Oberteils (3) eine ein Dekor aufweisende Dekorfolie (4) flächig befestigt ist und das Dekor auf die dem Oberteil (3) zugewandte Seite der Dekorfolie (4) aufgedruckt ist, **dadurch gekennzeichnet, dass** die Dekorfolie (4) aus demselben Material besteht wie das Oberteil (3) und dass die Verbindung zwischen der Dekorfolie (4) und dem Oberteil (3) klebemittelfrei ist.

2. Kunststoffschuh nach Anspruch, **dadurch gekennzeichnet, dass** das Material ein Polyurethan ist.

3. Verfahren zur Herstellung eines Schuhs nach einem der vorhergehenden Ansprüche, wobei die Sohle (2) und das Oberteil (3) durch Einbringen und Aufschäumung des Schuhmaterials in eine Gussform (6) hergestellt werden, die aus wenigstens einer Ober- und einer Unterschale (7, 8) besteht, wobei die Innenseite der Oberschale (7) die Oberseite des Oberteils (3) abbildet, **dadurch gekennzeichnet, dass** die Dekorfolie (4) vor dem Einbringen des Schuhmaterials an der Innenseite der Oberschale (7) angeordnet wird.

4. Verfahren nach Anspruch 3, **dadurch gekennzeichnet, dass** die Dekorfolie (4) mittels Unterdruck an der Innenseite der Oberschale (7) gehalten wird.

5. Verfahren nach Anspruch 4, **dadurch gekennzeichnet, dass** eine den Unterdruck erzeugende Saugvorrichtung einen feinporigen luftdurchlässigen Metallschaumformkörper (11) aufweist, der die Innenlage der Oberschale (7) bildet.

6. Verfahren nach Anspruch 5, **dadurch gekennzeichnet, dass** der Metallschaumformkörper (11) aus Aluminium besteht.

7. Verfahren nach einem der Ansprüche 3 bis 5, **dadurch gekennzeichnet, dass** die Dekorfolie (4) vor dem Anbringen an der Oberschale (7) erwärmt wird.

8. Verfahren nach einem der Ansprüche 4 und 5, **dadurch gekennzeichnet, dass** die Gussform (6) zur Erzeugung eines Unterdrucks im Metallschaumformkörper (11) mit einer Saugpumpe (12) verbunden ist.

## Claims

1. A plastics material shoe, in particular in a form of a clog, comprising a sole (2) and an upper part (3) which is connected to the sole (2), a decorative film (4) comprising a decoration being fastened in a planar manner to the upper surface of the upper part (3) and the decoration being printed on the side of the decorative film (4) facing the upper part (3), **characterised in that** the decorative film (4) consists of the same material as the upper part (3), and **in that** the connection between the decorative film (4) and the upper part (3) is free of an adhesive.

2. The plastics material shoe according to claim 1, **characterised in that** the material is a polyurethane.

3. A method for producing a shoe according to any one of the preceding claims, the sole (2) and the upper part (3) being produced by introducing the shoe material into a casting mould (6) and foaming it there, said casting mould consisting of at least one upper shell and one lower shell (7, 8), the inner face of the upper shell (7) forming the upper face of the upper part (3), **characterised in that** the decorative film (4) is arranged against the inner face of the upper shell (7) before introducing the shoe material.

4. The method according to claim 3, **characterised in that** the decorative film (4) is held against the inner face of the upper shell (7) by means of a vacuum.

5. The method according to claim 4, **characterised in that** a suction device generating the vacuum has a fine-pored air-permeable metal foam moulded body (11) which forms the inner layer of the upper shell (7).

6. The method according to claim 5, **characterised in that** the metal foam moulded body (11) consists of aluminum.

7. The method according to any one of claims 3 to 5, **characterised in that** the decorative film (4) is heated before application to the upper shell (7).

8. The method according to either claim 4 or claim 5, **characterised in that** the casting mould (6) is connected to a suction pump (12) to generate a vacuum in the metal foam moulded body (11).

## Revendications

1. Chaussure en matière plastique sous la forme d'un sabot, comportant une semelle (2) et une partie supérieure (3), qui est assemblée avec la semelle (2), sur la face supérieure de la partie supérieure (3) un film décoratif (4) doté d'un décor étant fixé en nappe et le décor étant imprimé sur le côté faisant face à la partie supérieure (3) du film décoratif (4), **caractérisé en ce que** le film décoratif (4) est constitué de la même matière que la partie supérieure (3) et **en ce que** l'assemblage entre le film décoratif (4) et la partie supérieure (3) est exempt d'agent adhésif.

2. Chaussure en matière plastique selon la revendication 1, **caractérisé en ce que** la matière est un polyuréthane.

3. Procédé de fabrication d'une chaussure selon l'une quelconque des revendications précédentes, la semelle (2) et la partie supérieure (3) étant fabriquées par introduction et expansion de la matière de la chaussure dans un moule de fonte (6) qui se compose d'au moins une coque supérieure et une coque inférieure (7, 8), la face intérieure de la coque supérieure (7) reproduisant la face supérieure de la partie supérieure (3), **caractérisé en ce qu'**avant l'introduction de la matière de la chaussure, le film décoratif (4) est placé sur la face intérieure de la coque supérieure (7).

4. Procédé selon la revendication 3, **caractérisé en ce que** le film décoratif (4) est maintenu par dépression sur la face supérieure de la coque supérieure (7).

5. Procédé selon la revendication 4, **caractérisé en ce qu'**un dispositif d'aspiration générant la dépression comporte un corps moulé en mousse métallique (11) à pores fins, perméable à l'air qui forme la couche intérieure de la coque supérieure (7).

6. Procédé selon la revendication 5, **caractérisé en ce que** le corps moulé en mousse métallique (11) est en aluminium.

7. Procédé selon l'une quelconque des revendications 3 à 5, **caractérisé en ce qu'**avant de monter la coque supérieure (7), on échauffe le film décoratif (4).

8. Procédé selon l'une quelconque des revendications 4 et 5, **caractérisé en ce que** pour créer une dépression dans le corps moulé en mousse métallique (11), le moule de fonte (6) est relié à une pompe aspirante (12).
